# EUROPEAN PATENT SPECIFICATION

(11) **EP 1 502 345 B1**
(45) Date of publication and mention of the grant of the patent: **21.04.2010**
(21) Application number: 03730238.7
(22) Date of filing: 02.05.2003
(51) Int. Cl.: H02K 3/493

(54) **MOUNTING OF THE STATOR WINDING OF THE ELECTRIC MOTOR OF AN ELEVATOR MACHINE**
ANBRINGUNG DER STATORWICKLUNG DES ELEKTROMOTORS EINER AUFZUGSMASCHINE
MONTAGE D'UN ENROULEMENT DE STATOR DU MOTEUR ELECTRIQUE D'UN ELEVATEUR

(30) Priority: 08.05.2002 FI 20020885
(43) Date of publication of application: 02.02.2005
(73) Proprietor: Kone Corporation, 00330 Helsinki (FI)
(72) Inventor: AULANKO, Esko, FIN-04230 Kerava (FI); MUSTALAHTI, Jorma, FIN-05620 Hyvinkää (FI); HUPPUNEN, Jussi, FIN-53850 Lappeenranta (FI)
(74) Representative: Graf Glück Habersack Kritzenberger
(86) International application number: PCT/FI2003/000342
(87) International publication number: WO 2003/096517

(56) References cited:
- EP-A- 0 307 216
- DE-A- 3 612 112
- US-A- 4 093 881

## Description

The present invention relates to a stator of the electric motor of an elevator machine having an arrangement for mounting the stator winding, said stator comprising a stator frame provided with stator teeth and slots between them, in which stator the stator winding is fitted in said slots and which has mounting elements fitted in the slots to fasten the stator winding to the slots.

The stator of electric motors used in elevator machines consists of a stator frame having stator teeth and stator slots between them, and a stator winding arranged in the stator frame around the teeth. The stator frame may be laminated from thin plates forming a stator pack. The conductors of the stator winding are placed directly in the stator slots e. g. as conductor bundles. The conductors are held in the slots by means of slot wedges fitted at the upper edge of the slot. The slot wedges may form a dovetail joint with the upper edge of the slot. A drawback with prior-art stators is a relatively slow and complicated winding process.

In addition, it is necessary to prevent conductor movements in the slots caused by mechanical forces. For this purpose, it may be necessary to apply a sealant between the wedge and the conductors, or else each slot wedge is provided with an adapter piece having friction surfaces on its sides and two side pieces with corresponding friction surfaces on their sides, as described e. g. in patent application FI-A-884154. These solutions are also relatively complicated.

The EP 307 216 A discloses a stator with the features of the preamble of claim 1. The stator comprises a stator frame with teeth and slots in which slots the stator winding is fitted via fastening elements.

The object of the present invention is to achieve a new type of stator comprising a winding structure that will allow a faster winding process. The stator of the invention comprises a mounting structure which is implemented using a plastic winding frame of e. g. trough-like shape, around which the stator winding is fitted. The winding frame comprises locking elements projecting from it and made of the same material with it, by means of which the winding can be quickly fastened to the stator frame and which prevent the winding coil from moving out from the stator frame. The features characteristic of the solution of the invention are presented in detail in the claims below.

The invention makes it possible to achieve a stator which can be manufactured in a simple, fast and economical winding process, especially because the windings can be prepared as complete packs before being mounted in the stator slots.

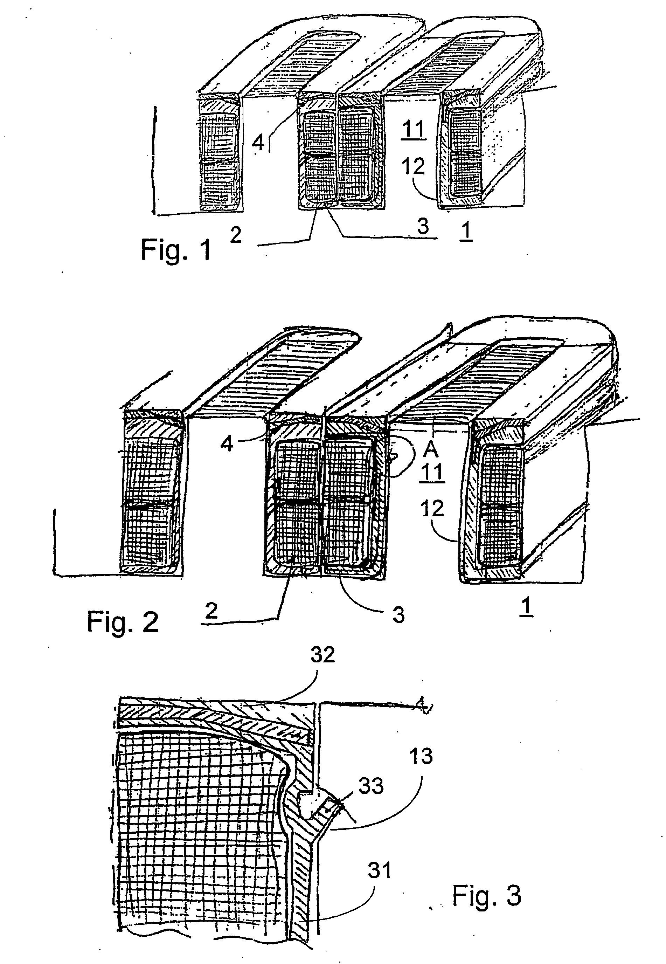

In the following, the invention will be described in detail by the aid of and example with reference to the attached drawings, wherein Fig. 1 presents a stator according to the invention, comprising a plastic winding frame and a slot stick, Fig. 2 presents a stator according to the invention with a plastic winding frame for an electric motor, and Fig. 3 presents a magnified view of detail A in Fig. 2.

Fig. 1 represents the stator of a cage induction motor used as an elevator hoisting motor. The stator consists of a stator frame 1 having stator teeth 11 and stator slots 12 between them. The motor has a stator winding (field pole coil) 2 placed around the stator tooth 11, wound around a trough-like plastic winding frame 3, the bottom 31 of the winding frame 3 being placed against the side face of the tooth 11. The winding frame 3 comprises a slot stick 4 made of ferromagnetic material, extending over the mouth of the slot and adapted to its shape, for controlling the magnetic flux. The slot stick has been cast inside the winding frame 32 on one side of it, so the slot stick 5 is firmly fastened in the winding frame and can not be detached. Before being mounted on the stator slots 12, the windings 2 are fitted in the winding frames 3 to form complete winding packs and then mounted on the stator frame by pushing them into the slots 12.

Fig. 2 and 3 show how the bottom 31 of the winding frame 3 is provided with small elastic locking tongues 33 projecting from the bottom. When the stator winding is being pushed into the slot 12, the locking tongues will snap in into holes 13 provided in the slot of the stator frame. The locking elements 33 thus prevent the field pole coil from moving out from the stator frame.

It is obvious to the person skilled in the art that different embodiments of the invention are not limited to the example described above, but that they may be varied within the scope of the claims presented below.

## Claims

1. Stator of the electric motor of an elevator machine, said stator comprising a stator frame (1) provided with stator teeth (11) and slots (12) between them, the stator winding (2) being fitted in said slots (12), said stator having fastening elements fitted in the slots for fastening the stator winding to the slots, **characterized in that** the stator comprises a winding frame (3) having a bottom (31) placed against the slot and sides (32), in which winding frame the winding can be fitted, and that the winding frame comprises flexible locking elements (33) projecting from the bottom, which locking elements can be fitted into holes (13) provided in the slots and which, when the winding frame is being pushed into the slot, are inserted into the holes and lock the winding frame and the stator winding to the stator frame.

2. Stator according to claim 1, **characterized in that** the winding frame (3) is substantially trough-like.

3. Stator according to claim 1, **characterized in that** the winding frame (3) is made of a plastic-like material.

4. Stator according to claim 1 or 4, character- ized in that the locking elements (33) are of the same material as the winding frame.

5. Stator according to claim 1, **characterized in that** it comprises substantially strip-like or stick-like elements (4) of ferromag- netic material fitted at the mouths of the slots (12) for controlling the magnetic flux.

6. Stator according to claim 5, **characterized in that** said elements (4) are fitted inside the winding frame.

7. Stator according to claim 1, **characterized in that** said elements (4) are shaped to follow the form of the mouth of the slot.

## Patentansprüche

1. Stator des elektrischen Motors einer Aufzugsmaschine, welcher Stator einen Statorrahmen (1) aufweist, der mit Statorzähnen (11) und dazwischen angeordneten Schlitzen (12) versehen ist, wobei die Statorwicklung (2) in den Schlitzen (12) aufgenommen ist, welcher Stator Befestigungselemente aufweist, die in den Schlitzen aufgenommen sind, um die Statorwicklung in den Schlitzen zu befestigen, **dadurch gekennzeichnet, dass** der Stator einen Wicklungsrahmen (3) aufweist, der einen gegen dem Schlitz angeordneten Boden (31) und Seiten (32) aufweist, in welchem Wicklungsrahmen die Wicklung aufgenommen werden kann, und dass der Wicklungsrahmen flexible Verriegelungselemente (33) aufweist, die von dem Boden abstehen, welche Verriegelungselemente in Löcher (13) aufgenommen werden können, die in den Schlitzen vorgesehen sind und welche, wenn der Wicklungsrahmen in den Schlitz gedrückt wird, in die Löcher hineinragen und den Wicklungsrahmen und die Statorwicklung an den Statorrahmen festlegen.

2. Stator nach Anspruch 1, **dadurch gekennzeichnet, dass** der Wicklungsrahmen (3) im Wesentlichen trogförmig ist.

3. Stator nach Anspruch 1, **dadurch gekennzeichnet, dass** der Wicklungsrahmen (3) aus einem plastikartigen Material besteht.

4. Stator nach Anspruch 1 oder 4, **dadurch gekennzeichnet, dass** die Verriegelungselemente (33) aus dem gleichen Material wie der Wicklungsrahmen bestehen.

5. Stator nach Anspruch 1, **dadurch gekennzeichnet, dass** er im Wesentlichen streifen- oder stiftförmige Elemente (4) aus ferromagnetischen Material enthält, die an der Mündung der Schlitze (12) angeordnet sind, um den magnetischen Fluss zu steuern.

6. Stator nach Anspruch 5, **dadurch gekennzeichnet, dass** die Elemente (4) innerhalb des Wicklungsrahmens aufgenommen sind.

7. Stator nach Anspruch 1, **dadurch gekennzeichnet, dass** die Elemente (4) derart geformt sind, dass sie der Form der Mündung des Schlitzes folgen.

## Revendications

1. Stator pour moteur électrique d'appareil élévateur, ledit stator étant constitué d'un bâti de stator (1) comportant des dents de stator (11) séparées par des fentes (12), l'enroulement de stator (2) étant ajusté dans lesdites fentes (12), ledit stator ayant des éléments de fixation ajustés dans les fentes destinées à fixer l'enroulement de stator aux fentes, **caractérisé par le fait que** le stator comprend un bâti d'enroulement (3) ayant un fond (31) tourné vers la fente et les côtés (32), l'enroulement s'ajustant dans le bâti d'enroulement, et que le bâti d'enroulement comprend des éléments de verrouillage flexibles (33) en saillie par rapport au fond, les éléments de verrouillage pouvant être ajustés dans des trous (13) disposés dans les fentes et qui, quand le bâti d'enroulement est poussé dans la fente, s'insèrent dans les trous et verrouillent le bâti d'enroulement et le stator au bâti de stator.

2. Stator selon la revendication 1, **caractérisé par le fait que** le bâti d'enroulement (3) est essentiellement en forme d'auge.

3. Stator selon la revendication 1, **caractérisé par le fait que** le bâti d'enroulement (3) est constitué de matériau de type matière plastique.

4. Stator selon la revendication 1 ou 4, **caractérisé par le fait que** les éléments de verrouillage (33) sont constitués du même matériau que le bâti d'enroulement.

5. Stator selon la revendication 1, **caractérisé par le fait que** il comprend essentiellement des éléments en matière ferromagnétique en forme de bande ou de bâtons (4) s'adaptant aux embouchures des fentes (12) de façon à contrôler le flux magnétique,

6. Stator selon la revendication 5, **caractérisé par le fait que** lesdits éléments (4) sont ajustés à l'intérieur du bâti d'enroulement.

7. Stator selon la revendication 1, **caractérisé par le fait que** lesdits éléments (4) sont formés de manière à suivre la forme de l'embouchure de la fente.
